# EUROPÄISCHE PATENTSCHRIFT

(11) **EP 2 648 899 B1**
(45) Veröffentlichungstag und Bekanntmachung des Hinweises auf die Patenterteilung: **08.01.2020**
(21) Anmeldenummer: 11791515.7
(22) Anmeldetag: 29.11.2011
(51) Int. Cl.: B30B 11/20, F16C 19/38

(54) **PRESSE ZUM PRESSEN EINES MATERIALS**
PRESS FOR PRESSING A MATERIAL
PRESSE POUR COMPRIMER UN MATÉRIAU

(30) Priorität: 06.12.2010 DE 102010062477
(43) Veröffentlichungstag der Anmeldung: 16.10.2013
(73) Patentinhaber: Aktiebolaget SKF, 415 50 Göteborg (SE)
(72) Erfinder: AGGÜL, Ilim, 97421 Schweinfurt (DE); HEEGE, Thomas, 97422 Schweinfurt (DE); IWERS, Björn, 24214 Lindau (DE); KRÖGER, Jan, 25337 Elmshorn (DE); LEMPER, Peter, 29456 Hitzacker (DE); PFEUFFER, Christina, 97776 Eußenheim (DE)
(74) Vertreter: Schonecke, Mitja
(86) Internationale Anmeldenummer: PCT/EP2011/071256
(87) Internationale Veröffentlichungsnummer: WO 2012/076361

(56) Entgegenhaltungen:
- CN-U- 201 552 771
- CN-Y- 201 189 726
- DE-A1-102008 038 543
- FR-A1- 2 747 747
- GB-A- 526 890
- US-A- 2 700 940
- US-A- 4 235 485
- US-A- 4 770 424
- US-A1- 2010 183 759

## Beschreibung

Ausführungsbeispiele der vorliegenden Erfindung beziehen sich auf Pressen zum Pressen eines Materials, beispielsweise Pelletieranlagen oder Pelletpressen, wie sie in der holzverarbeitenden Industrie oder der Nahrungsmittel-, der Nahrungsmittelergänzungs- oder Kraftfuttermittelindustrie verwendet werden können.

Viele Materialien werden zur Weiterverarbeitung oder zum Verbrauch in Form kleiner gepresster Körper, sogenannter Pellets, vertrieben. Hierbei wird das Ausgangsmaterial häufig in kugel- oder zylinderförmiger, verdichteter Form durch Pressen in sogenannten Pelletieranlagen oder -pressen hergestellt. So wird beispielsweise Holz oder Kraftfuttermittel für die Mast und/oder die Ernährung von Nutztieren in Pelletform vertrieben.

Pelletieranlagen umfassen im Allgemeinen einen oder mehrere Koller, die auf einer Ring- oder Flachmatrize das zu verarbeitende Material in Pellets pressen. Der Koller umfasst hierbei die eigentliche Kollerfelge (Walze), aber ebenso Lagerdeckel, die Lager und auch die Achse. Die Walzen werden dabei mit zwei Einzellagern gelagert, bei denen es sich um angestellte Kegelrollenlager oder Pendelrollenlager handelt. Bei der Lagerung mit konventionellen Kegelrollenlagern ist eine Anstellung unverzichtbar, wobei sie bei der Montage einen hohen Aufwand und Erfahrung erfordert. Eine kollektive, und damit zufällige Anstellung aller Kegelrollenlager gemeinsam kann nur dann erfolgen, wenn es die Betriebsbedingungen zulassen d. h. keine hohen Anforderungen an die Lagerung gestellt werden.

Aufgrund von hohen Lasten und Stößen, denen die Walzen während des Betriebs ausgesetzt sind, stellen Pelletieranlagen hohe Anforderungen an die Lagerung. Aus diesem Grund sollte die Montage so genau wie möglich durchgeführt werden. In der Realität wird jedoch - nicht zuletzt aus Kostengründen - die Anstellung ungenau vorgenommen, um die Montage einfacher und damit kosteneffizienter durchzuführen. Somit werden Pelletieranlagen häufig nicht im Bereich ihrer maximalen Leistungsfähigkeit oder im Bereich eines erhöhten Verschleißes betrieben.

Hinzu tritt, dass durch die verarbeiteten Materialien häufig eine hohe Kontaminationsgefahr für die Lager besteht. Die Umgebungsbedingungen weisen entsprechend einen sehr hohen Verschmutzungsgrad auf, sodass regelmäßig, beispielsweise stündlich, nachgeschmiert werden muss, um die eingedrungenen Verschmutzungspartikel aus den Lagern wieder herauszudrücken. Hierdurch sind Wartungsaufwand und -kosten für den Betreiber enorm.

Im Falle von Pelletiermaschinen im Bereich der Kraftfutterherstellung müssen diese Anlagen ferner schon aufgrund gesetzlicher Bestimmungen mit lebensmittelverträglichem Fett geschmiert werden, da das Fett in das Pressgut gelangen kann. Aufgrund der hohen Anforderung an die Schmiereigenschaften, also beispielsweise einem guten Verschleißschutz und einer entsprechenden Temperaturbeständigkeit, sind herkömmliche lebensmittelverträgliche Fette kaum geeignet, hochwertige und geeignete jedoch sehr teuer.

Die US 2010/0183759 A1 beschreibt so beispielsweise eine Walze für eine Pelletieranlage, die zwei Pendelrollenlager zur Lagerung der Walze und eine Abdichtung aufweist.

Die DE 10 2008 O38 543 A1 beschreibt eine Einrichtung zur Verhinderung des Eindringens von Schmutz- und Staubpartikel in Lagergehäusen, insbesondere bei Presswalzen, in welchen eine Achse durchgeführt ist und deren Lager mit einem Schutzring abgedichtet sind.

GB 526,890, gemäß dem Oberbegriff des Anspruchs 1, lehrt eine Maschine zum Formen von Pellets, Knollen etc., die eine drehbare zylindrische Form mit Öffnungen und Walzen umfasst, die das dem Zylinder zugeführte Material sukzessive gegen die innere Oberfläche drücken und es durch die Öffnungen drücken, so dass die geformten Körper durch einen Abstreifer entfernt werden können.

FR 2 747 747 lehrt eine Walze zum Pressen eines Materials durch eine Granulierpresse, die eine Kunststoffschale aufweist. Die Schale wird durch Lager getragen, die es ermöglichen, sich frei zu drehen. Die Außenfläche der Schale ist mit Wolframkarbid beschichtet.

Ausgehend hiervon besteht die Aufgabe der vorliegenden Erfindung darin, einen verbesserten Betrieb einer Presse zum Pressen von Material zu ermöglichen.

Diese Aufgabe wird durch eine Presse gemäß Anspruch 1 oder die Verwendung einer selbsthaltenden Lagereinheit aus dem Kraftfahrzeugbereich gemäß Anspruch 10 gelöst.

Ein Ausführungsbeispiel einer Presse zum Pressen eines Materials umfasst eine Walze, eine Matrize, die derart ausgebildet ist, dass das Material zwischen der Walze und der Matrize pressbar ist, und eine Lagereinheit, die die Walze aufnimmt und ausgebildet ist, um die Walze zu lagern, wobei die Lagereinheit als selbsthaltende zwei- oder mehrreihige Lagereinheit ausgeführt ist.

In Ausführungsbeispielen der vorliegenden Erfindung wird eine selbsthaltende Lagereinheit aus dem Kraftfahrzeugbereich mit einer in einem vorbestimmten Lagerluftbereich liegenden Lagerluft zur Lagerung einer Walze einer solchen Presse verwendet, wobei die Lagereinheit zwei- oder mehrreihig ausgeführt ist und eine Schmiermittelmenge und ein Dichtelement aufweist, wobei das Dichtelement ausgebildet ist, um ein Eindringen von Verunreinigungen in die Lagereinheit und ein Austreten von Schmiermittel zu unterbinden, und wobei die Schmiermittelmenge derart bemessen ist, um einen sicheren Betrieb der Lagereinheit über eine vorbestimmte Betriebsdauer zu ermöglichen.

Ausführungsbeispielen der vorliegenden Erfindung liegt die Erkenntnis zugrunde, dass ein verbesserter Betrieb einer Presse zum Pressen eines Materials dadurch erzielt werden kann, indem anstelle der bisher verwendeten Anordnung mehrerer einreihiger Kegelrollenlager oder mehrerer Pendelrollenlager eine selbsthaltende Lagereinheit zum Einsatz gebracht wird, die als zwei- oder mehrreihige Lagereinheit ausgeführt ist. Dadurch, dass diese zwei- oder mehrreihige Lagereinheit selbsthaltend ausgeführt ist, ist es möglich, diese vor Montage der Presse gezielt hinsichtlich Lagerluft und gegebenenfalls anderer betriebswesentlicher Parameter einzustellen. Eine selbsthaltende Lagereinheit ist eine solche, die vormontierbar ist, also insbesondere nicht nur radiale Kräfte, sondern auch axiale Kräfte in beide axialen Richtungen aufnehmen kann. Anders ausgedrückt ist eine Lagereinheit, wie sie im Rahmen von Ausführungsbeispielen der vorliegenden Erfindung verwendet wird, ausgebildet, um radiale und axiale Kräfte entlang ihrer Lagerachse, die z. B. mit einer Rotationsachse der Welle einer Presse zusammenfallen kann, in beide Richtungen aufzunehmen.

Darüber hinaus ist es möglich, bei Ausführungsbeispielen der vorliegenden Erfindung die Lagereinheit mit einem Schmiermittelvorrat auszustatten, der gerade so bemessen ist, dass ein sicherer Betrieb der Lagereinheit über eine vorbestimmte Betriebsdauer sichergestellt ist. Durch das Einbringen eines Dichtelements bzw. zwei oder mehrerer entsprechender Dichtelemente kann die Lagereinheit darüber hinaus so ausgeführt werden, dass ein Austreten des Schmiermittels und ein Eintreten von Verunreinigungen in die Lagereinheit im Wesentlichen vollständig unterbunden werden. Hierdurch ist es möglich, die Wartungsintervalle und den Wartungsaufwand deutlich zu reduzieren, und die Presse trotzdem im Bereich ihres optimalen Arbeitspunktes oder -bereichs zu betreiben.

Dies kann beispielsweise durch die Verwendung einer entsprechenden Lagereinheit aus dem Kraftfahrzeugbereich, beispielsweise aus dem Nutzkraftfahrzeugbereich bzw. aus dem Lastkraftfahrzeugbereich, geschehen.

Ausführungsbeispiele der vorliegenden Erfindung werden unter Bezugnahme auf die beiliegenden Figuren näher erläutert.
Fig. 1 zeigt eine schematische Darstellung einer Presse zum Pressen eines Materials gemäß einem Ausführungsbeispiel der vorliegenden Erfindung;
Fig. 2 zeigt eine Querschnittsdarstellung durch eine Lagereinheit einer Presse gemäß einem Ausführungsbeispiel der vorliegenden Erfindung;
Fig. 3 zeigt eine Querschnittsdarstellung durch eine Pelletiermaschine gemäß einem ersten Vergleichsbeispiel;
Fig. 4 zeigt eine Querschnittsdarstellung durch eine Pelletiermaschine gemäß einem zweiten Vergleichsbeispiel;
Fig. 5 zeigt eine Querschnittsdarstellung durch eine Pelletiermaschine gemäß einem dritten Vergleichsbeispiel;
Fig. 6 zeigt eine Querschnittsdarstellung durch eine Lagereinheit einer Presse gemäß einem Ausführungsbeispiel der vorliegenden Erfindung; und
Fig. 7 zeigt eine Querschnittsdarstellung durch eine Lagereinheit einer Presse gemäß einem weiteren Ausführungsbeispiel der vorliegenden Erfindung;

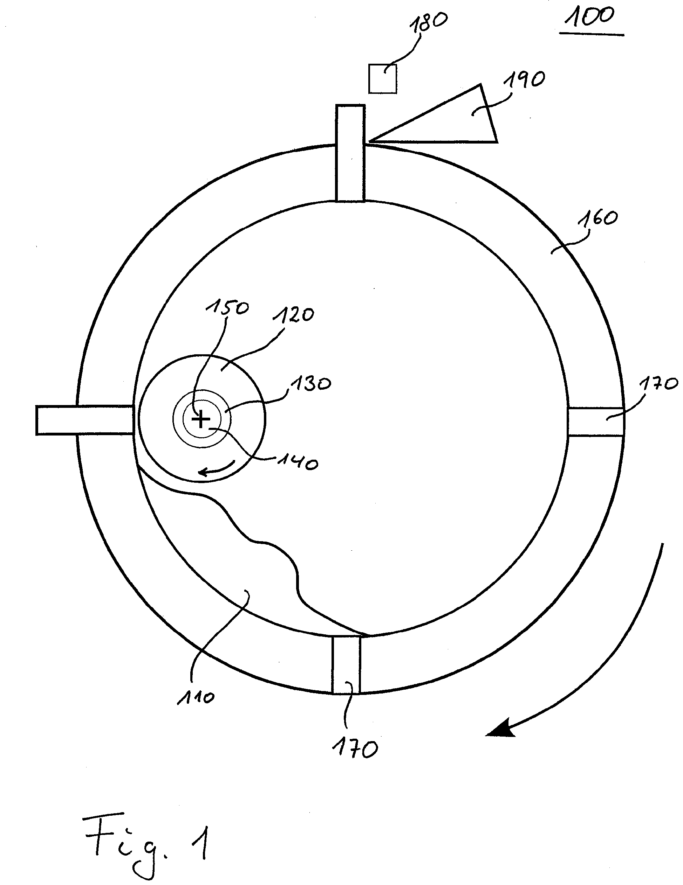

Im Folgenden werden unter Bezugnahme auf die Figuren 1 bis 7 Ausführungsbeispiele der vorliegenden Erfindung sowie Vergleichsbeispiele näher beschrieben.

Fig. 1 zeigt eine vereinfachte Querschnittsdarstellung durch eine Presse 100 zum Pressen von Material 110 gemäß einem Ausführungsbeispiel der vorliegenden Erfindung. Die Presse 100 weist wenigstens eine Walze 120 auf, die über eine Lagereinheit 130 an einem Halterungsbauteil 140 gelagert ist. Bei der in Fig. 1 gezeigten Presse 100 handelt es sich bei dem Halterungsbauteil 140 um eine feststehende Achse. Die Walze 120 ist Teil einer als Koller bezeichneten Baugruppe, die unter anderem auch das Halterungsbauteil 140 und die Lagereinheit 130 umfasst.

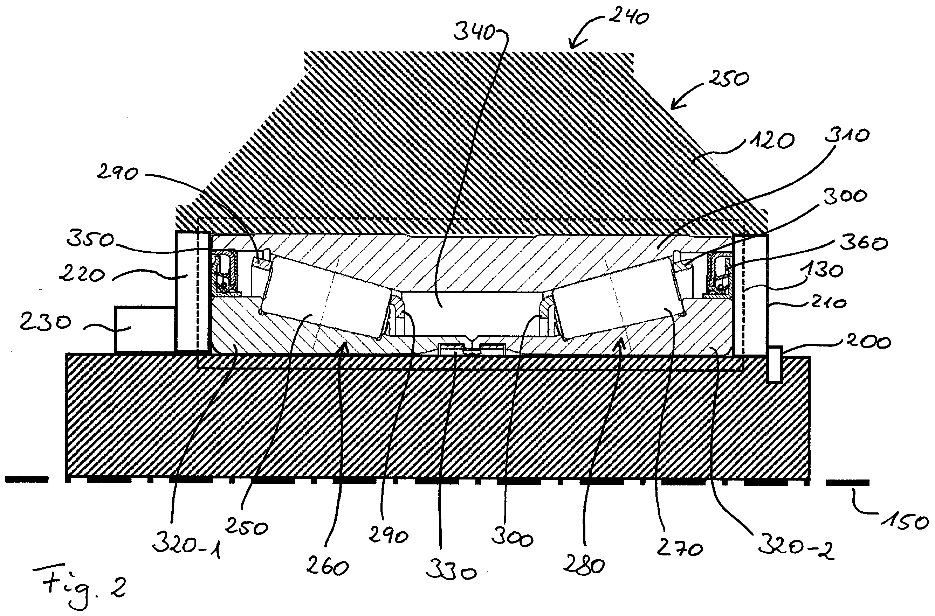

Die Lagereinheit 130, die näher im Zusammenhang mit Fig. 2 beschrieben wird, ist derart angeordnet und ausgerichtet, um die Walze 120 um eine Rotationslinie oder Rotationsachse 150 der Walze 120 drehbar zu lagern. Die Rotationslinie 150 der Walze 120 fällt in dem hier gezeigten Ausführungsbeispiel mit einer Symmetrieachse der feststehende Achse (Halterungsbauteil) 140 zusammen. Bei anderen Ausführungsbeispielen können diese jedoch beispielsweise auch einen parallelen Versatz senkrecht zu ihren Erstreckungsrichtungen aufweisen.

Die Presse 100 weist ferner eine Matrize 160 auf, die im vorliegenden Fall als Ringmatrize ausgeführt ist. Die Ringmatrize 160 ist drehbar um eine in Fig. 1 nicht gezeigt Rotationslinie angeordnet, die parallel zu der Rotationslinie 150 der Walze 120 verläuft. Sie wird durch einen Motor angetrieben, der in Fig. 1 nicht gezeigt ist. Im Unterschied hierzu ist die Walze 120 frei drehbar, also insbesondere nicht angetrieben.

Die Ringmatrize 160 weist ferner eine Mehrzahl von Öffnungen 170 auf, durch die das Material 110 durch die Walze 120 gepresst wird. Die Öffnungen weisen hierbei einen Querschnitt auf, der eine Querschnittsform der von der Presse erzeugten Pellets 180 definiert. Die Presse weist ferner ein oder mehrere optionale Schneidwerkzeuge 190 auf, die an einer Außenseite der Matrize 160 angebracht sind.

Die Matrize 160 und die Walze 120 sind hierbei derart ausgebildet und beabstandet, dass das Material 110 bei Drehung der Matrize von der Walze 120 durch die Matrize 160 hindurch gepresst wird. Zu diesem Zweck besteht zwischen der Matrize 160 und der Walze 120 häufig ein voreingestellter Abstand. Anders ausgedrückt sind bei dieser Anordnung die Matrize 160 und die Walze 120 nicht zwangsgekoppelt. Eine Rotation der Walze 120 wird erst durch das in die Presse eingefüllte Material 110 bewirkt.

Bei anderen Ausführungsbeispielen kann hingegen der Abstand ebenso nicht vorhanden sein, sodass eine Zwangskopplung durch ein Abrollen der Walze 120 an der Matrize 160 bewirkt wird. Ebenso kann auch eine Zwangskopplung bei einem bestehenden oder nicht bestehenden Abstand zwischen Matrize 160 und Walze 120 durch eine mechanische Kopplung, etwa ein Zahnradeingriff oder ein Getriebe realisiert sein. Hierdurch können auch feste Drehzahlverhältnisse und Rotationsrichtungen der Walze 120 und der Matrize 160 zueinander realisiert werden.

Durch eines oder mehrere optionale Schneidwerkzeuge 190 werden die Pellets 180 von der Matrize 160 abgeschnitten. Hierdurch werden Pellets mit etwa gleichbleibender Länge erzeugt, während im Falle des Fehlens des oder der Schneidwerkzeuge 190 die Länge der Pellets nicht zuletzt durch die Materialeigenschaften des Materials 110 und die Betriebsparameter der Presse (z. B. ihre Rotationsgeschwindigkeit) bestimmt wird.

Selbstverständlich können bei Pressen gemäß weiteren Ausführungsbeispielen der vorliegenden Erfindung auch abweichende Anzahlen von Walzen 120 zum Einsatz kommen. So werden beispielsweise häufig Pressen mit zwei, drei oder mehreren Walzen verwendet. Ebenso können weitere optionale Komponenten im Inneren der Matrize angeordnet sein, etwa weitere Stützstreben oder Leitbleche für das Material 110.

Fig. 2 zeigt eine Detailvergrößerung der Presse 100 aus Fig.1. Fig. 2 zeigt, genauer gesagt, einen Querschnitt durch die Walze 120, die Lagereinheit 130 und die feststehende Achse (Halterungsteil) 140 entlang ihrer Rotations- oder Symmetrielinie 150. Die Lagereinheit ist - typischerweise mittels einer Übergangspassung - auf der feststehenden Achse (Halterungsbauteil) 140 aufgebracht und mittels eines Sicherungsrings 200, beispielsweise eines Sprengrings, über einen ersten Lagerdeckel 210 gegen eine axiale Bewegung entlang der Achse 140 in eine erste Richtung gesichert. An einer dem ersten Lagerdeckel 210 abgewandten Seite der Lagereinheit 130 ist über einen zweiten Lagerdeckel 220 die Lagereinheit mittels einer Wellenmutter 230 gegen eine Verschiebung entlang der Achse 140 in eine der ersten Richtung entgegengesetzten Richtung gesichert.

Selbstverständlich kann die Lagereinheit bei anderen Ausführungsbeispielen der vorliegenden Erfindung durch andere Passungen und andere Sicherungsmaßnahmen gegen ein Verrutschen in axialer Richtung gesichert werden, etwa durch ein Verkleben oder eine Stramm- oder Presspassung.

Mittels einer Strammpassung ist die Lagereinheit 130 ferner mit der Walze 120 kraftschlüssig verbunden. In einem äußeren Bereich 240 der Walze 120 weist diese eine Verzahnung auf, die ausgebildet ist, um eine intensive Wechselwirkung mit dem Material 110 (nicht gezeigt in Fig. 2) zu erzielen, um so den Pressvorgang zwischen Matrize 160 (nicht gezeigt in Fig. 2) und Walze 120 zu ermöglichen. Die Verzahnung kann beispielsweise fischgrätenartig, halbkreisförmig oder schräg ausgeführt sein. In einem weiter innen liegenden Bereich 250 der Walze 120 weist die Walze hingegen keine besondere Verzahnungsstruktur oder Profilierung auf.

Die Lagereinheit 130 weist ein zweireihiges Kegelrollenlager in O-Anordnung auf, wobei Fig. 2 einen ersten Wälzkörper 250 einer ersten Reihe 260 und einen zweiten Wälzkörper 270 einer zweiten Reihe 280 zeigt. Die Wälzkörper 250, 270 sind - typisch für ein Kegelrollenlager - kegelstumpfförmig geformt und werden durch einen ersten 290 und einen zweiten Wälzlagerkäfig 300 geführt. Die spitzen Seiten der Wälzkörper 250, 270 sind einander zugewandt (O-Anordnung).

Bei dem in Fig. 2 gezeigten Ausführungsbeispiel laufen die Wälzkörper der beiden Reihen 260, 280 in einem einteilig ausgeführten Außenring 310 und in einem zweiteilig ausgeführten Innenring 320, der einen ersten Teilinnenring 320-1 und einen zweiten Teilinnenring 320-2 aufweist. Die beiden Teilinnenringe 320-1, 320-2 des Innenrings werden durch eine Befestigungseinrichtung 330 in Form eines gelochten Metallrings zusammengehalten, dessen Löcher in entsprechende Vorsprünge der beiden Innenringe 320-1, 320-2 eingreifen.

In weiteren Ausführungsbeispielen der vorliegenden Erfindung kann die Befestigungseinrichtung 330 ebenfalls durch einen oder mehrere Klammern oder Clipps gebildet sein. Ebenso können die beiden Teile des Innenrings 320 durch ein anderes kraft-, form- oder stoffschlüssiges Verfahren miteinander verbunden werden.

Bei dem in Fig. 2 gezeigten Ausführungsbeispiel weist nur der zweiteilige Innenring 320-1, 320-2 Borde zur Führung der Wälzkörper 250, 270 auf, während der gemeinsame Außenring 310 an seinen Laufflächen keine Borde aufweist.

Aufgrund der Ausgestaltung des gemeinsamen, einteiligen Außenrings 310, der O-Anordnung der beiden Reihen 260, 280 der Wälzkörper 250, 270, des zweigeteilten Innenrings 320 mit den beiden Teilen 320-1 und 320-2 sowie dem gelochten Metallring (Befestigungseinrichtung) 330, handelt es sich bei der Lagereinheit um eine selbsthaltende Lagereinheit, die vor der Montage der Presse 100 vom Hersteller vormontiert geliefert und als Einheit dann in die Presse 100 oder die Kollerfelge montiert werden kann. Hierdurch ist es möglich, die Parameter (z. B. die Lagerluft) der Lagereinheit 130 separat und deutlich kontrollierter und einfacher einzustellen, als wenn eine entsprechende Einstellung erst im Rahmen des Zusammenbaus der Presse 100 erfolgen würde. Als Folge ist es möglich, die Lagereinheit 130 besser auf ihre optimalen Betriebsparameter einzustellen, sodass beim späteren Betrieb der Presse 100 diese näher an ihrem optimalen Arbeitspunkt operieren kann.

Im Bereich des gelochten Metallrings (Befestigungseinrichtung 330) weist die Lagereinheit einen Hohlraum 340 auf, der beispielsweise zur Aufnahme des Schmiermittelreservoirs dienen kann. Dieses kann vor der Endmontage der Lagereinheit 210 mit einer ausreichenden Menge eines für die entsprechende Anwendung geeigneten Schmiermittels befüllt werden, sodass ein sicherer Betrieb der Lagereinheit 210 unter normalen Betriebsbedingungen für eine vorbestimmte Betriebsdauer sichergestellt werden kann (For-Life-Schmierung / Lebensdauerschmierung).

Bei der Auswahl eines entsprechenden Schmiermittels sind sowohl die mechanischen und damit die thermischen Belastungen, als auch andere Betriebsparameter zu beachten. So kann es gegebenenfalls sinnvoll sein, als Schmiermittel ein lebensmittelverträgliches Fett zu verwenden. Als Schmiermittel können jedoch ebenso Öle und andere Fette, sowie Feststoffschmiermittel verwendet werden.

Um einerseits ein Austreten des Schmiermittels und andererseits ein Eintreten von Verunreinigungen in die Lagereinheit 130 zu unterbinden, weist diese an ihren den beiden Lagerdeckeln 220, 230 zugewandten Seiten ferner ein erstes 350 und ein zweites Dichtelement 360 auf, die jeweils in einer Aussparung zwischen dem Innenring 320 und dem Außenring 310 angeordnet sind. Bei dem in Fig. 2 gezeigten Ausführungsbeispiel handelt es sich um Kassettendichtungen für Fett mit jeweils einer, zwei, drei oder mehreren radialen und axialen Dichtlippen, die die Lagereinheit 130 abdichten. Darüber hinaus kann sie optional weitere Komponenten, etwa Schutzbleche oder andere Elemente umfassen. Selbstverständlich können auch andere Dichtelemente, etwa andere Labyrinthdichtungen oder Öldichtungen zum Einsatz kommen.

Genauer gesagt weist die Lagereinheit 130, wie sie in Fig. 2 gezeigt ist, zwei integrierte Fettdichtungen auf. Diese Dichtungseinheiten (Kassettendichtung) weisen einen Außenmantel aus Stahlblech und Elastomer auf. Weiterhin können sie eine Kombination aus radialen und axialen Dichtlippen sowie integrierten Gegenlaufflächen und axialen Dichtlippen und axialen Anlaufflächen in verschiedenen Ausformungen aufweisen. So können die Dichtlippen beispielsweise - sofern sie überhaupt vorgesehen sind - mit oder ohne Zugfederbelastung implementiert sein. Ebenso können eine oder mehrere Schutzlippen verwendet werden.

Als weitere Option kann eine integrierte Laufbuchse für die Dichtlippe verwendet werden. Auch kann optional ein Elastomersitz in der Bohrung und/oder am Außenmantel implementiert werden, wobei für die verschiedenen gegebenenfalls vorhandenen Elastomerbauteile verschiedene Elastomer-Werkstoffe herangezogen werden können. In dem gezeigten Ausführungsbeispiel werden beispielsweise eine zugfederbelastete Dichtlippe und drei Schutzlippen im Rahmen der Dichtelemente verwendet.

Die innere Konstruktion der Kassettendichtungen kann so einen bestmöglichen Schutz gegen Wasser, Staub, Schlamm oder andere Verunreinigungen bieten. Zudem sorgt sie für den sicheren Rückhalt des Schmierstoffs in der Lagerstelle. Die Kassettendichtungen können gegebenenfalls zudem die Feinbearbeitung von Wellen überflüssig machen.

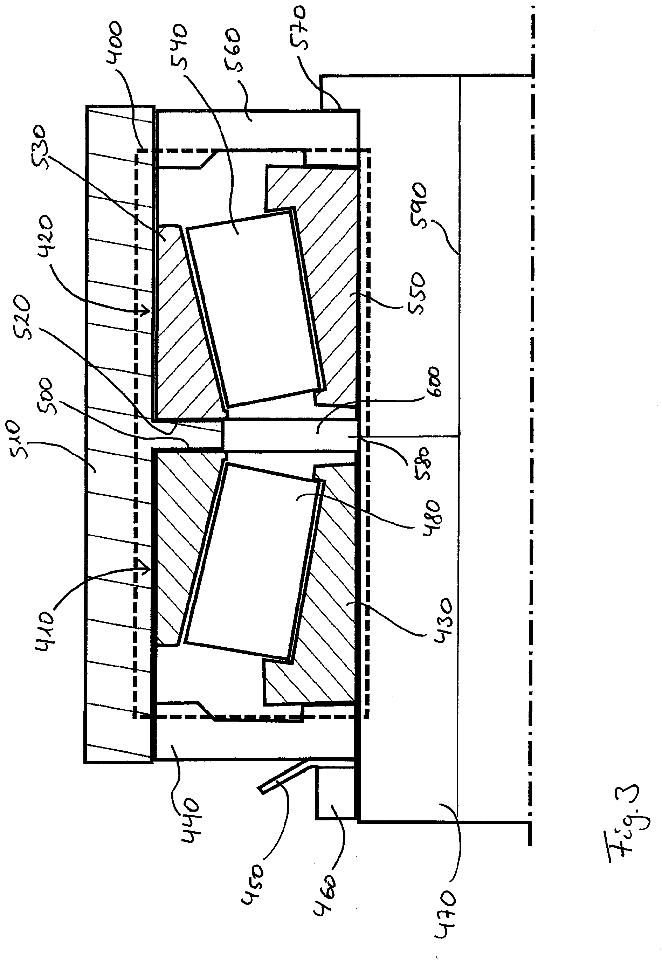

Um den Unterschied zwischen Ausführungsbeispielen der vorliegenden Erfindung und konventionellen Pressen mit entsprechenden Lageranordnungen zu illustrieren, werden nunmehr kurz im Zusammenhang mit den Fig. 3, 4 und 5 konventionelle Pressen beschrieben.

Bisher werden zwei einreihige Kegelrollen- oder zwei Pendelrollenlager bei entsprechenden Pelletpressen eingesetzt. Bei der Ausführung mit Kegelrollenlagern erfolgt das Anstellen meist während des Zusammenbaus der Presse manuell und daher häufig zufällig. Die tatsächlich eingestellte Lagerluft bzw. Vorspannung wird nach der Montage nicht kontrolliert, sodass dieser Wert unbekannt bleibt. Damit ist mit einer großen Streuung und schlimmstenfalls mit einer Reduzierung der Lagerlebensdauer der Presse zu rechnen.

Die Lagerung wird extern abgedichtet in Form von metallischen Labyrinthdichtungen oder Elastomerdichtungen an der Walze (auch als Kollerfelge oder Gehäuse bezeichnet). Die Pressen werden über automatische Zentralschmiersysteme regelmäßig, typischerweise stündlich, mit Fett versorgt. Aufgrund von hohen Wartungskosten bedingt durch die häufige Nachschmierung wird oft auch nicht das empfohlene Fett, sondern ein preiswerteres Fett zur Schmierung der Lagerung benutzt. Die Betreiber der Anlagen im Lebens- bzw. Futtermittelbereich werden daher schon aus ökonomischen Gründen in Versuchung geführt, aufgrund der schlechteren Schmiereigenschaften und/oder hohe Kosten kein lebensmittelverträgliches Fett einzusetzen und dadurch das Risiko einer Verunreinigung des Pressmaterials einzugehen, was rechtlichen Bestimmungen widersprechen würde.

Fig. 3 zeigt eine Fig. 2 entsprechende Querschnittsdarstellung einer konventionellen Lageranordnung 400. Die Lageranordnung weist ein erstes 410 und ein zweites Kegelrollenlager 420 auf, die beide als einreihige Lager ausgeführt sind. Entsprechend ihrer einreihigen Ausführung weisen beide weder einen gemeinsamen Innen- noch einen gemeinsamen Außenring auf. Ebenso sind beide weder zusammen noch getrennt selbsthaltend.

Ein Innenring 430 des ersten Kegelrollenlagers steht - im montierten Zustand der Pelletpresse - mit einem ersten Lagerdeckel 440 in Kontakt, der über einen Sicherungsring 450 und eine Wellenmutter 460 mit einer starren Achse 470 mechanisch verbunden ist. Über die kegelförmigen Wälzkörper 480 des ersten Kegelrollenlagers 410 übt die Verschraubung der Wellenmutter eine Kraft auf einen Außenring 490 dieses Kegelrollenlagers 410 aus, die über eine Schulter 500 einer Kollerfelge 510 auf diese übertragen wird. Über eine weitere Schulter 520 der Kollerfelge 510 wird die Kraft auf einen Außenring des zweiten Kegelrollenlagers 420 übertragen. Aufgrund einer O-Anordnung der Kegelrollenlager 410, 420 wird diese Kraft entsprechend über einen Außenring 530 des zweiten Kegelrollenlagers 420, seine Wälzkörper 540 auf seinen Innenring 550 übertragen. Über einen mit dem Innenring 550 in Kontakt stehenden zweiten Lagerdeckel 560 wird die Kraft schließlich wieder über eine Schulter 570 der starren Achse 470 in diese eingeleitet.

Dieser Kraftfluss zeigt deutlich, dass einerseits diese konventionelle Lageranordnung 410 nicht selbsthaltend ist, sodass eine Montage der Lageranordnung 400 erst im Zusammenhang mit der Endmontage der Presse erfolgen kann. Andererseits zeigt dieser Kraftfluss aber ebenso, dass die Lagerluft dieser Lageranordnung 400 stark von der über die Wellenmutter 460 ausgeübten Kraft bestimmt wird. Eine Justage kann folglich nur im Rahmen der Endmontage der Pelletpresse erfolgen, da aufgrund der fehlenden selbsthaltenden Eigenschaft eine separate Einstellung auf einen bestimmten Wert unmöglich ist. Da jedoch eine entsprechende Einstellung - wie zuvor dargestellt - bei der Endmontage kaum möglich ist, wird diese Lageranordnung 400 eine weniger präzise Einstellung der Lagerluft aufweisen, sodass der Arbeitspunkt der Pelletpresse weniger optimal sein wird, als unter Verwendung eines Ausführungsbeispiels der vorliegenden Erfindung.

Darüber hinaus zeigt Fig. 3 ein System, das eine Dauerschmierung bzw. regelmäßige Nachschmierung erforderlich macht. So weist die starre Achse 470 im Bereich zwischen den beiden Schultern 500, 520 eine Öffnung 580 einer Schmiermittelzuführung 590 auf, die in einen Hohlraum 600 zwischen den beiden Kegelrollenlagern 410, 420 mündet. Von dort wird - aufgrund der fehlenden Abdichtung - das Schmiermittel durch die Lager 410, 420 und über die beiden Lagerdeckel 440, 560 in den Pressraum gelangen.

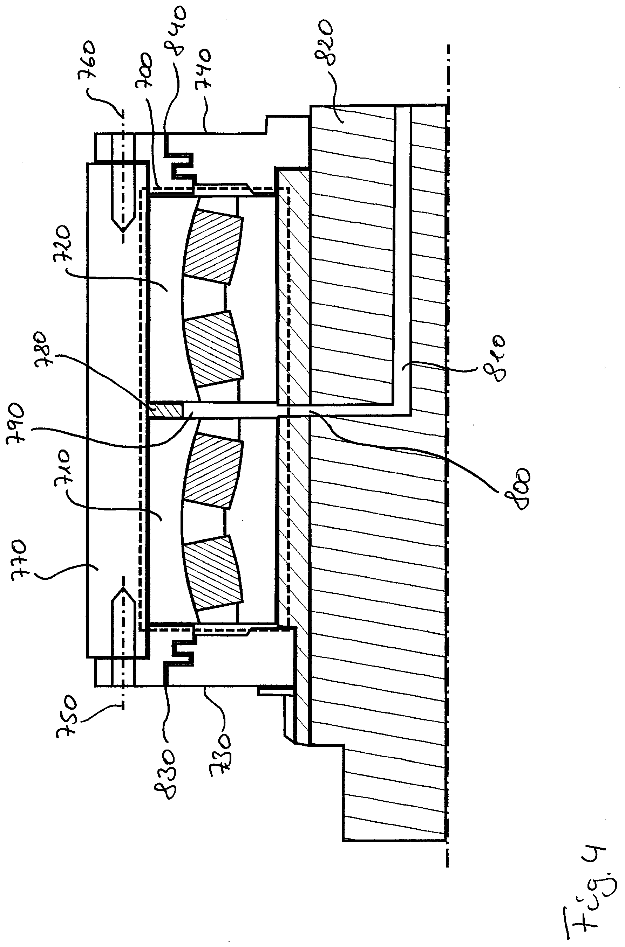

Fig. 4 zeigt eine weitere der Fig. 2 ähnliche Darstellung einer konventionellen Lageranordnung 700 mit einem ersten 710 und einem zweiten Pendelrollenlager 720. Die beiden Pendelrollenlager 710, 720 sind zwischen einem ersten 730 und einem zweiten Lagerdeckel 740 angeordnet, die über erste 750 und zweite Schrauben 760 mit einer Kollerfelge 770 der Pelletpresse verschraubt sind. Beide Pendelrollenlager 710, 720 stehen über einen Pass- oder Abstandsring 780 im Bereich ihrer jeweiligen Außenringe miteinander in Kontakt, wobei die beiden Lagerdeckel 730, 740 ebenfalls im zusammengesetzten Zustand mit dem Außenring in Kontakt stehen. Auch diese konventionelle Lageranordnung 700 ist nicht selbsthaltend.

Auch weist sie darüber hinaus einen Hohlraum 790 im Bereich des Abstandsrings 780 zwischen den beiden Pendellagern 710, 720 auf, in den eine Öffnung 800 einer Schmiermittelversorgung 810 im Inneren einer stehenden Achse 820 mündet. Über diese werden dem Hohlraum 790 und damit den beiden Lagern 710, 720 Schmiermittel zugeführt, das über Öffnungen 830, 840 in den beiden Lagerdeckeln in den Pressraum austreten kann, sodass auch diese Lageranordnung 700 zu einer Verunreinigung des zu pressenden Materials durch Schmiermittel beitragen wird.

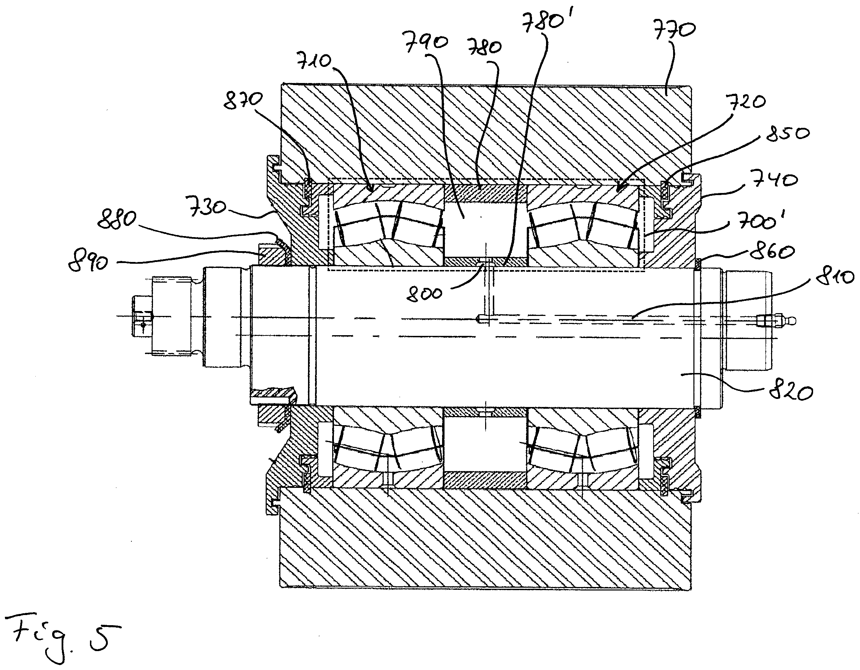

Fig. 5 zeigt eine weitere der Fig. 2 ähnliche Querschnittsdarstellung einer konventionellen Lageranordnung 700', die sich von der in Fig. 4 nur geringfügig unterscheidet, weshalb auf die Beschreibung der Anordnung aus Fig. 4 weitgehend verwiesen wird. Im Unterschied zu der Lageranordnung 700 aus Fig. 4 stehen bei der in Fig. 5 gezeigten Lageranordnung sowohl die Außenringe wie auch die Innenringe der Pendelrollenlager 710, 720 durch Abstandsringe 780, 780' mittelbar miteinander in Kontakt. Entsprechend sind die Lagerdeckel 730, 740 zweiteilig ausgeführt, wobei jeweils ein Teil eines jeden Deckels mit dem Außen- und ein Teil mit dem jeweiligen Innenring der beiden angrenzenden Lager 710, 720 in Kontakt stehen. Im Fall des zweiten Lagerdeckels 740 sind beide Teile jeweils über Sicherungsringe 850, 860 mit der Kollerfelge 770 bzw. der stehenden Achse 820 verbunden. Ein Teil des ersten Lagerdeckels 730 ist ebenfalls über einen Sicherungsring 870 mit der Kollerfelge 770 verbunden, während der andere Teil des ersten Lagerdeckels 730 über einen Sicherungsring 880 und eine Wellenmutter 890 mit der stehenden Achse 820 verbunden ist. Auch diese Lageranordnung 700' ist daher nicht selbsthaltend

Auch weist sie wiederum ein entsprechendes Schmiermittelsystem 810 mit der Öffnung 800 zu dem Hohlraum 790 auf, was zu einer Kontamination des zu pressenden Materials mit Schmiermittel führen kann.

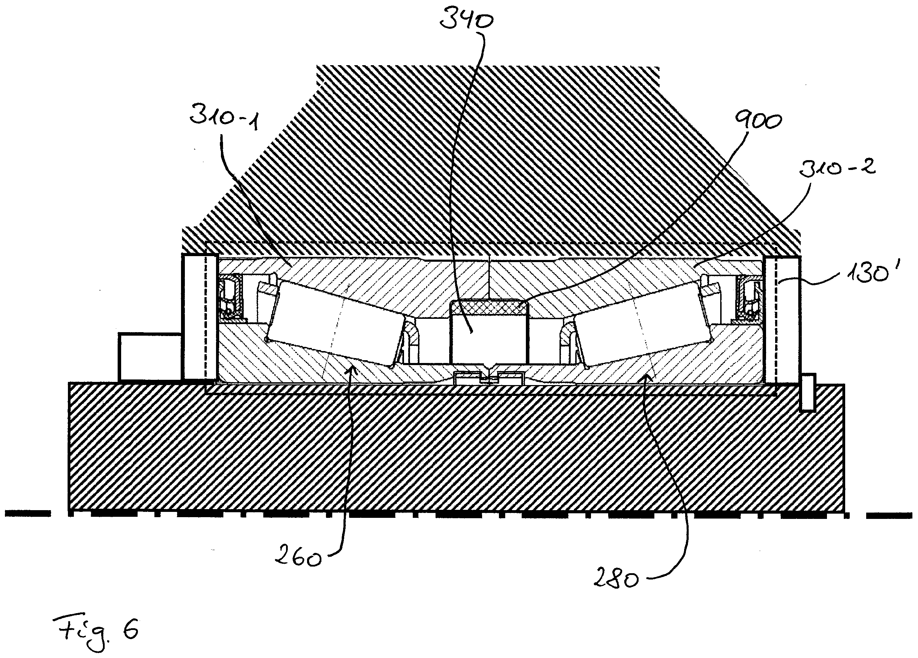

Fig. 6 zeigt eine Querschnittsdarstellung einer Lagereinheit 130' gemäß einem weiteren Ausführungsbeispiel der vorliegenden Erfindung, die sich von der in Fig. 2 dargestellten Lagereinheit 130 hinsichtlich eines Aspekts unterscheidet, sodass ergänzend auch auf die Beschreibung zu der in Fig.2 gezeigten Lagereinheit 130 verwiesen wird.

Im Unterschied zu dem einteilig ausgeführten Außenring 310 der Lagereinheit 130 aus Fig. 2 weist die in Fig. 6 gezeigte Lagereinheit 130 einen zweiteiligen Außenring 310 mit den beiden Teilen 310-1 und 310-2 auf, die dem ersten Kegelrollenlager 260 bzw. dem zweiten Kegelrollenlager 280 zugeordnet und entsprechend angeordnet sind. Um die zuvor beschriebene selbsthaltende Eigenschaft weiter zu unterstützen, weist die Lagereinheit 130' ferner einen Ring 900 im Bereich der Stirnflächen der beiden Teile des Außenrings 130-1, 130-2 auf. Dieser kann beispielsweise mit den beiden Teilen des Außenrings abschnittsweise eine formschlüssige Verbindung eingehen, und so die selbsthaltenden Eigenschaften weiter unterstützen. Der Ring 900 kann aus unterschiedlichen Materialien gefertigt sein, etwa Kunststoff oder Metall, sofern das Material mit dem in den Hohlraum 340 eingebrachten Schmiermittel verträglich ist.

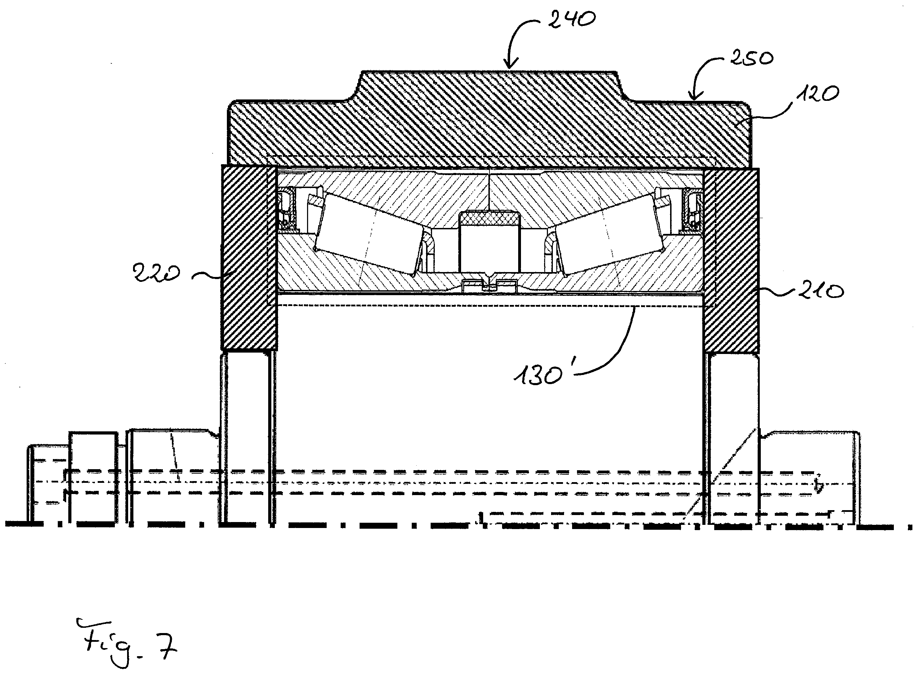

Fig. 7 zeigt eine weitere Querschnittsdarstellung durch eine Presse 100 gemäß einem Ausführungsbeispiel der vorliegenden Erfindung, die sich hinsichtlich der Lagerung von der in Fig. 6 gezeigten Lagerung kaum unterscheidet, weshalb an dieser Stelle wiederum auf die Beschreibungen der Figuren 6 und 2 verwiesen wird.

Die Lagereinheit 130 aus Fig. 7 unterscheidet sich von der in Fig. 6 gezeigten nicht. Die Unterschiede betreffen - abgesehen von konstruktiv bedingten Strukturen des Halterungsbauteils 140 - im Wesentlichen die Form und Ausgestaltung der Walze 120 und der beiden Lagerdeckel 210, 220. Während sich der äußere Bereich 240 der Walze kaum von den zuvor beschriebenen äußeren Bereichen 240 unterscheidet, weist der innere Bereich 250 bei dem in Fig. 7 gezeigten Ausführungsbeispiel eine wesentlich geringere Steigung auf. Dieser verläuft vielmehr im Wesentlichen parallel zu dem äußeren Bereich.

Ein weiterer Unterschied besteht in der konkreten Ausgestaltung der Lagerdeckel 210, 220, die bei dem in Fig. 7 gezeigten Ausführungsbeispiel länger sind und mechanisch mit der Walze 120 verbunden sind.

Auch die in den Fig. 6 und 7 gezeigten Ausführungsbeispiele können die zuvor beschriebenen Effekte ermöglichen. Durch den Einsatz einer zweireihigen Lagereinheit mit einem zweiteiligen, durch den Kunststoffring 900 zusammengehalten oder gemeinsamen Außenring 310, kann so ein Lager mit einer genau definierten und reproduzierbarer herstellbaren Lagerluft geschaffen werden. Die Lagereinheiten 130, 130' besitzen so eine definierte Lagerluft und können abgedichtet und mit einem für die Anwendung passenden Fett im Rahmen einer Lebensdauerschmierung versehen werden.

Durch den Einsatz einer selbsthaltenden Lagereinheit 130 entfällt die Wartung - außer bei außergewöhnlichen Ereignissen und gegebenenfalls im Rahmen von Vorsorgeinspektionen - im Allgemeinen komplett, da diese auf Lebenszeit geschmiert werden. Es wird ebenfalls keine Zentralschmiereinheit mehr benötigt, da die Fettmenge und die Fettauswahl auf die Anwendung und die Standzeit optimiert werden kann. Der Betreiber hat dadurch keinen Wartungsaufwand mehr und spart Zeit und Geld.

Außerdem kann auch der externe Dichtungsträger optional entfallen, da die Dichtung in die Lagerung integriert wird. Die schleifende Abdichtung (Dichtelemente 350, 360, Kassettendichtungen) der Lagereinheit 130 ermöglicht im Gegensatz zu der bisherigen Spaltdichtung einerseits, dass Verunreinigungen nicht in die Lagerung gelangen können, sodass somit vorzeitige Lagerausfälle reduziert werden können. Andererseits gewährleistet die Abdichtung auch, dass das Fett im Wesentlichen nicht aus der Lagerung tritt und das Pressgut verunreinigt wird.

Erfindungsgemäß ist ferner eine Beschichtung der Lagerringe 310, 320 vorgesehen, oder sind ein oder mehrere dünne Zwischenringe zwischen die Lagerringe 310, 320 und das Halterungsbauteil 140 (feststehende Achse) eingebracht, die gegen ein "Wandern" der Lagerringe 310, 320 im eingebauten Zustand wirken können, indem diese beim Betrieb der Presse entstehende Riefen in den entsprechenden Bauteilen mit dem Beschichtungs- oder Zwischenringmaterial auffüllen. Als Material für die Beschichtung oder die Zwischenringe kommen grundsätzlich erfindungsgemäß Bronze, oder auch Elastomere infrage.

Die Montage der Lagereinheiten 130 wird somit einerseits wegen der Möglichkeit des Einpassens von Zwischenringen vereinfacht, da dies eine genaue Anstellung der einzelnen Lager während der Endmontage der Presse ersetzt. Außerdem werden Einbaufehler weitgehend vermieden. Bei der neuen Lösung mit der Lagereinheit 130 wird eine genaue Anstellung der Kegelrollenlager durch die definierte voreingestellte Axialluft bei geringem Montageaufwand ermöglicht. Dadurch wird eine günstigere Lastverteilung (Verteilung der Last auf viele Wälzkörper) erreicht und die Standzeit der Lager verlängert.

Darüber hinaus entfällt auch die Montage der einzelnen Komponenten (d. h. zwei einreihige Kegelrollenlager, externe Dichtungsträger etc.), da nun nur eine selbsthaltende Lagereinheit 130, in die bereits alle Komponenten integriert sein können, einzubauen ist. Um die Montage zu erleichtern, können die Lagereinheiten 130 beispielsweise ebenfalls optionale Schnellmontagevorrichtungen aufweisen. Bei diesen kann es sich um eine einfache Anlagefläche ebenso wie um eine komplexere Struktur handeln, etwa eine Kupplung oder einen Pressverband.

Lagereinheiten 130 gemäß Ausführungsbeispielen der vorliegenden Erfindung werden im Kraftfahrzeugbereich, und hier insbesondere im Schwerlastkraftbereich verwendet. Diese werden auch als sogenannte "Truck Hub Units" (THU) bezeichnet, weisen jedoch Tragzahlen auf, die für Pelletpressen eigentlich nicht verwendbar sind.

Der vorliegenden Erfindung liegt jedoch ferner die Erkenntnis zugrunde, dass aufgrund der wesentlich besseren Anpassung der Lagerluft die Belastungen im Bereich der Lagerung von Walzen bei Pressen geringer ausfallen, wie Versuchsreihen und Berechnungen gezeigt haben. Obwohl also eigentlich Lagereinheiten aus dem Kraftfahrzeugbereich aufgrund zu geringer Tragzahlen eigentlich nach konventioneller Herangehensweise nicht im Pressenbereich einsetzbar sind, können diese sehr wohl aufgrund der besser angepassten Lagerluft und dem damit einhergehenden geringeren Ermüdung verwendet werden.

Aus dem gleichen Grund ist beobachtet worden, dass auch die Lagertemperaturen im Betrieb geringer als bei konventionellen Pelletpressen ausfallen. Dies ermöglicht eine breitere Auswahl an zur Verfügung stehenden Schmiermitteln für die einzelnen Anwendungsgebiete.

Bei Ausführungsbeispielen der vorliegenden Erfindung werden daher zwei- oder mehrreihige, selbsthaltende Lagereinheiten verwendet, bei denen optional eine definierte axiale und/oder radiale Lagerluft eingestellt ist. Ferner können diese optional einen gemeinsamen Außen- und/oder Innenring aufweisen. Ebenso optional können diese mit einer integrierten Abdichtung versehen werden. Optional können sie auch mit Schmiermittel befüllt werden. Optional ist darüber hinaus auch eine Beschichtung der Wälzkörperlaufbahnen und/oder Lagerringflächen möglich. Ebenso optional können die Lagereinheiten eine Schnellmontagevorrichtung aufweisen, z. B. einen hydraulisch oder elektrisch generierter Pressverband oder eine entsprechend generierte Kupplung.

### Bezugszeichenliste

- 100: Presse
- 110: Material
- 120: Walze
- 130: Lagereinheit
- 140: Halterungsbauteil
- 150: Rotationslinie
- 160: Matrize
- 170: Öffnungen
- 180: Pellets
- 190: Schneidwerkzeug
- 200: Sicherungsring
- 210: erster Lagerdeckel
- 220: zweiter Lagerdeckel
- 230: Wellenmutter
- 240: äußerer Bereich
- 250: erster Wälzkörper
- 260: erste Reihe
- 270: zweiter Wälzkörper
- 280: zweite Reihe
- 290: erster Wälzlagerkäfig
- 300: zweiter Wälzlagerkäfig
- 310: Außenring
- 320: Innenring
- 330: Befestigungseinrichtung
- 340: Hohlraum
- 350: erstes Dichtelement
- 360: zweites Dichtelement
- 400: Lageranordnung
- 410: erstes Kegelradlager
- 420: zweites Kegelradlager
- 430: Innenring
- 440: erster Lagerdeckel
- 450: Sicherungsring
- 460: Wellenmutter
- 470: starre Achse
- 480: Wälzkörper
- 490: Außenring
- 500: Schulter
- 510: Kollerfelge
- 520: weitere Schulter
- 530: Außenring
- 540: Wälzkörper
- 550: Innenring
- 560: zweiter Lagerdeckel
- 570: Schulter
- 580: Öffnung
- 590: Schmiermittelzuführung
- 600: Hohlraum
- 700: Lageranordnung
- 710: erstes Pendelrollenlager
- 720: zweiten Pendelrollenlager
- 730: erster Lagerdeckel
- 740: zweiter Lagerdeckel
- 750: erste Schrauben
- 760: zweite Schrauben
- 770: Kollerfelge
- 780: Abstandsring
- 790: Hohlraum
- 800: Öffnung
- 810: Schmiermittelversorgung
- 820: stehenden Achse
- 830: Öffnung
- 840: Öffnung
- 850: Sicherungsring
- 860: Sicherungsring
- 870: Sicherungsring
- 880: Sicherungsring
- 890: Wellenmutter
- 900: Ring

## Patentansprüche

1. Presse (100) zum Pressen eines Materials (110), mit folgenden Merkmalen:
einer Walze (120);
einer Matrize (160), die derart ausgebildet ist, dass das Material (110) zwischen der Walze (120) und der Matrize (160) pressbar ist;
einer Lagereinheit (130), die die Walze (120) aufnimmt und ausgebildet ist, um die Walze (120) zu lagern,
wobei die Lagereinheit (130) als vormontierbare, selbsthaltende zwei- oder mehrreihige Lagereinheit (130) ausgeführt ist;
**dadurch gekennzeichnet dass**, die Lagereinheit (130) ausgebildet ist, um bei einer Betriebstemperatur zwischen 110°C und 140°C zu arbeiten, dass die Lagereinheit (130) ferner einen Zwischenring oder eine Beschichtung zwischen einem Außenring (310) der Lagereinheit (130) und der Walze (120) oder einen Zwischenring oder eine Beschichtung zwischen einem Innenring (320) der Lagereinheit (130) und einem Bauteil (140) der Presse (100) aufweist, bezüglich dem die Walze (120) gelagert ist und dass der Zwischenring oder die Beschichtung ein Elastomer oder Bronze aufweist.

2. Presse (100) nach Anspruch 1, bei der die Lagereinheit (130) eine Schmiermittelmenge und ein Dichtelement (350, 360) aufweist, wobei das Dichtelement (350, 360) ausgebildet ist, um ein Eindringen von Verunreinigungen in die Lagereinheit (130) und ein Austreten von Schmiermittel zu unterbinden, und wobei die Schmiermittelmenge derart bemessen ist, um einen sicheren Betrieb der Lagereinheit (130) über eine vorbestimmte Betriebsdauer zu ermöglichen.

3. Presse (100) nach Anspruch 2, bei der die Schmiermittelmenge derart bemessen ist, um eine Lebensdauerschmierung zu ermöglichen

4. Presse (100) nach einem der Ansprüche 2 oder 3, bei der das Dichtelement (350, 360) ein Labyrinthdichtelement, ein Kassettendichtelement oder eine berührende Dichtung aufweist.

5. Presse (100) nach einem der vorhergehenden Ansprüche, bei der die Lagereinheit (130) ein zwei- oder mehrreihiges Kegelrollenlager in X- oder O-Konfiguration ist, und
wobei die Lagereinheit (130) einen gemeinsamen Innenring (320) oder einen mehrteilig ausgeführten und durch wenigstens eine Befestigungsvorrichtung (330) zusammengehaltenen Innenring (320-1, 320-2) aufweist,
oder
wobei die Lagereinheit (130) einen gemeinsamen Außenring (310) oder einen mehrteilig ausgeführten und durch wenigstens eine Befestigungsvorrichtung (900) zusammengehaltenen Außenring (310-1, 310-2) aufweist.

6. Presse (100) nach einem der vorhergehenden Ansprüche, bei der die Lagereinheit als zweireihige Lagereinheit ausgeführt ist.

7. Presse (100) nach Anspruch 6, bei der die Lagereinheit ein zweireihiges Kegelrollenlager in O-Anordnung aufweist.

8. Presse (100) nach einem der vorhergehenden Ansprüche, bei der die Lagereinheit (130) eine Schnellmontagevorrichtung aufweist.

9. Presse (100) nach einem der vorhergehenden Ansprüche, bei der die Presse (100) eine Pelletpresse für Holz oder Kraftfutter ist.

10. Verwendung einer vormontierbaren, selbsthaltenden Lagereinheit (130) aus dem Kraftfahrzeugbereich mit einer in einem vorbestimmten Lagerluftbereich liegenden Lagerluft zur Lagerung einer Walze (120) einer Presse (100) mit einer Matrize (160), die derart ausgebildet ist, dass ein Material (100) zwischen der Walze (120) und der Matrize (160) pressbar ist, wobei die Lagereinheit (130) zwei- oder mehrreihig ausgeführt ist und eine Schmiermittelmenge und ein Dichtelement (350, 360) aufweist, wobei das Dichtelement (350, 360) ausgebildet ist, um ein Eindringen von Verunreinigungen in die Lagereinheit (130) und ein Austreten von Schmiermittel zu unterbinden, und wobei die Schmiermittelmenge derart bemessen ist, um einen sicheren Betrieb der Lagereinheit (130) über eine vorbestimmte Betriebsdauer zu ermöglichen, **dadurch gekennzeichnet dass**, die Lagereinheit (130) ausgebildet ist, um bei einer Betriebstemperatur zwischen 110°C und 140°C zu arbeiten; dass die Lagereinheit (130) ferner einen Zwischenring oder eine Beschichtung zwischen einem Außenring (310) der Lagereinheit (130) und der Walze (120) oder einen Zwischenring oder eine Beschichtung zwischen einem Innenring (320) der Lagereinheit (130) und einem Bauteil (140) der Presse (100) aufweist, bezüglich dem die Walze (120) gelagert ist und dass der Zwischenring oder die Beschichtung ein Elastomer oder Bronze aufweist.

## Claims

1. Press (100) for pressing a material (110), having the following features:
a roller (120);
a die (160), which is formed in such a way that the material (110) can be pressed between the roller (120) and the die (160);
a bearing unit (130), which receives the roller (120) and is adapted to support the roller (120), the bearing unit (130) being designed as a self-retaining two-row or multi-row bearing unit (130) that can be pre-assembled;
**characterized**
**in that** the bearing unit (130) is adapted to work at an operating temperature between 110°C and 140°C,
**in that** the bearing unit (130) additionally has an intermediate ring or a coating between an outer ring (310) of the bearing unit (130) and the roller (120), or an intermediate ring or coating between an inner ring (320) of the bearing unit (130) and a component (140) of the press (100), with respect to which the roller (120) is supported, and
**in that** the intermediate ring or the coating has an elastomer or bronze.

2. Press (100) according to Claim 1, in which the bearing unit (130) has a quantity of lubricant and a sealing element (350, 360), wherein the sealing element (350, 360) is designed to prevent penetration of contaminants into the bearing unit (130) and leakage of lubricant, and wherein the quantity of lubricant is dimensioned in such a way as to permit safe operation of the bearing unit (130) over a predetermined operating period.

3. Press (100) according to Claim 2, in which the quantity of lubricant is dimensioned in such a way as to permit lifetime lubrication.

4. Press (100) according to either of Claims 2 and 3, in which the sealing element (350, 360) has a labyrinth seal element, a cartridge seal element or a contacting seal.

5. Press (100) according to one of the preceding claims, in which the bearing unit (130) is a two-row or multi-row tapered roller bearing in X or 0 configuration, and
wherein the bearing unit (130) has a common inner ring (320) or an inner ring (320-1, 320-2) constructed in many parts and held together by at least one fixing device (330),
or
wherein the bearing unit (130) has a common outer ring (310) or an outer ring (310-1, 310-2) constructed in many parts and held together by at least one fixing device (900).

6. Press (100) according to one of the preceding claims, in which the bearing unit is designed as a two-row bearing unit.

7. Press (100) according to Claim 6, in which the bearing unit has a two-roll tapered roller bearing in an 0 arrangement.

8. Press (100) according to one of the preceding claims, in which the bearing unit (130) has a quick-assembly device.

9. Press (100) according to one of the preceding claims, in which the press (100) is a pellet press for wood or concentrated feed.

10. Use of a self-retaining bearing unit (130) that can be pre-assembled from the motor vehicle sector with a bearing clearance lying in a predetermined bearing clearance range for supporting a roller (120) of a press (100) having a die (160), which is formed in such a way that a material (100) can be pressed between the roller (120) and the die (160), the bearing unit (130) being designed with two rows or multiple rows and having a quantity of lubricant and a sealing element (350, 360), the sealing element (350, 360) being designed to prevent penetration of contaminants into the bearing unit (130) and leakage of lubricant, and the quantity of lubricant being dimensioned in such a way as to permit safe operation of the bearing unit (130) over a predetermined operating period,
**characterized**
**in that** the bearing unit (130) is designed to work at an operating temperature between 110°C and 140°C,
**in that** the bearing unit (130) additionally has an intermediate ring or a coating between an outer ring (310) of the bearing unit (130) and the roller (120), or an intermediate ring or coating between an inner ring (320) of the bearing unit (130) and a component (140) of the press (100), with respect to which the roller (120) is supported, and
**in that** the intermediate ring or the coating has an elastomer or bronze.

## Revendications

1. Presse (100) pour comprimer un matériau (110), comprenant les caractéristiques suivantes :
un rouleau (120) ;
une matrice (160) qui est réalisée de telle sorte que le matériau (110) puisse être comprimé entre le rouleau (120) et la matrice (160) ;
une unité de palier (130) qui reçoit le rouleau (120) et qui est réalisée pour supporter le rouleau (120),
l'unité de palier (130) étant réalisée sous forme d'unité de palier (130) prémontable, autoportante, à deux ou plus de deux rangées ;
**caractérisée en ce que**
l'unité de palier (130) est réalisée de manière à fonctionner à une température de fonctionnement comprise entre 110°C et 140°C,
**en ce que** l'unité de palier (130) présente en outre une bague intermédiaire ou un revêtement entre une bague extérieure (310) de l'unité de palier (130) et le rouleau (120) ou une bague intermédiaire ou un revêtement entre une bague intérieure (320) de l'unité de palier (130) et un composant (140) de la presse (100), par rapport auquel est supporté le rouleau (120) et
**en ce que** la bague intermédiaire ou le revêtement présente un élastomère ou du bronze.

2. Presse (100) selon la revendication 1, dans laquelle l'unité de palier (130) présente une quantité de lubrifiant et un élément d'étanchéité (350, 360), l'élément d'étanchéité (350, 360) étant réalisé de manière à empêcher une pénétration d'impuretés dans l'unité de palier (130) et un échappement de lubrifiant, et la quantité de lubrifiant étant mesurée de manière à permettre un fonctionnement sûr de l'unité de palier (130) pendant une durée de fonctionnement prédéterminée.

3. Presse (100) selon la revendication 2, dans laquelle la quantité de lubrifiant est mesurée de manière à permettre une lubrification pendant toute la durée de vie.

4. Presse (100) selon la quelconque des revendications 2 ou 3, dans laquelle l'élément d'étanchéité (350, 360) présente un élément d'étanchéité à labyrinthe, un élément d'étanchéité à cassette, ou un joint d'étanchéité à contact.

5. Presse (100) selon l'une quelconque des revendications précédentes, dans laquelle l'unité de palier (130) est un palier à rouleaux coniques à deux ou plus de deux rangées, de configuration en X ou en 0, et
dans laquelle l'unité de palier (130) présente une bague intérieure commune (320) ou une bague intérieure (320-1, 320-2) réalisée en plusieurs parties et maintenue ensemble par au moins un dispositif de fixation (330),
ou
dans laquelle l'unité de palier (130) présente une bague extérieure commune (310) ou une bague extérieure (310-1, 310-2) réalisée en plusieurs parties et maintenue ensemble par au moins un dispositif de fixation (900).

6. Presse (100) selon l'une quelconque des revendications précédentes, dans laquelle l'unité de palier est réalisée sous forme d'unité de palier à deux rangées.

7. Presse (100) selon la revendication 6, dans laquelle l'unité de palier présente un palier à rouleaux coniques à deux rangées suivant un agencement en 0.

8. Presse (100) selon l'une quelconque des revendications précédentes, dans laquelle l'unité de palier (130) présente un dispositif de montage rapide.

9. Presse (100) selon l'une quelconque des revendications précédentes, la presse (100) étant une presse à granulés pour du bois ou des aliments concentrés.

10. Utilisation d'une unité de palier (130) prémontable, autoportante, dans le secteur automobile, comprenant un jeu situé dans une région de jeu prédéterminée pour le support sur palier d'un rouleau (120) d'une presse (100) comprenant une matrice (160) qui est réalisée de telle sorte qu'un matériau (100) puisse être comprimé entre le rouleau (120) et la matrice (160), l'unité de palier (130) étant réalisée à deux ou plus de deux rangées et présentant une quantité de lubrifiant et un élément d'étanchéité (350, 360), l'élément d'étanchéité (350, 360) étant réalisé de manière à empêcher une pénétration d'impuretés dans l'unité de palier (130) et un échappement de lubrifiant, et la quantité de lubrifiant étant mesurée de manière à permettre un fonctionnement sûr de l'unité de palier (130) pendant une durée de fonctionnement prédéterminée, **caractérisée en ce que**
l'unité de palier (130) est réalisée de manière à fonctionner à une température de fonctionnement comprise entre 110°C et 140°C,
**en ce que** l'unité de palier (130) présente en outre une bague intermédiaire ou un revêtement entre une bague extérieure (310) de l'unité de palier (130) et le rouleau (120) ou une bague intermédiaire ou un revêtement entre une bague intérieure (320) de l'unité de palier (130) et un composant (140) de la presse (100), par rapport auquel est supporté le rouleau (120) et
**en ce que** la bague intermédiaire ou le revêtement présente un élastomère ou du bronze.
